# EUROPEAN PATENT APPLICATION

(11) **EP 4 261 126 A1**
(43) Date of publication of application: **18.10.2023**
(21) Application number: 21906091.0
(22) Date of filing: 27.09.2021
(51) Int. Cl.: B64C 39/02, B64D 27/24, B64D 35/06, H02K 16/02, H02K 21/14

(54) **MOTOR UNIT AND AIRCRAFT**

(30) Priority: 14.12.2020 JP 2020207023
(71) Applicant: Panasonic Intellectual Property Management Co., Ltd., Osaka-shi, Osaka 540-6207 (JP)
(72) Inventor: SATO, Daisuke, Osaka-shi, Osaka 540-6207 (JP)
(74) Representative: SSM Sandmair
(86) International application number: PCT/JP2021/035244
(87) International publication number: WO 2022/130726

(57) **Abstract**

A motor unit rotates by a magnetic force generated in a stator. A first rotary wing includes a first rotor and a second rotor that rotate by a rotational force of the first rotor. A second rotary wing rotates by a rotational force of the second rotor. A blade of the second rotary wing is coupled rotationally movably to the rotator at the first rotational position and the second rotational position. When the blade is at the first rotational position, the blade protrudes in the direction intersecting the second axial center from the rotator. When the blade is at the second rotational position, a tip end of the blade is positioned in a second direction opposite to the first direction relative to the tip end of the blade positioned at the first rotational position.

## Description

### TECHNICAL FIELD

The present disclosure relates to a motor unit and an aircraft.

### BACKGROUND ART

PTL 1 discloses a double reverse rotation screw mechanism. In this double reverse rotation screw mechanism, a front side screw is attached to one of two coaxially arranged drive shafts, and a rear side screw is attached to the other. These two screws are configured to rotate in mutually opposite directions, thereby generating a propulsion in one direction.

In the double reverse rotation screw mechanism described above, both the front side screw and the rear side screw generate a propulsive force. Therefore, for example, when used as a rotary wing of an aircraft, the double reverse rotation screw mechanism is suitable for flight of the aircraft requiring a relatively large propulsive force at the time of vertical takeoff and landing, for example.

However, in the double reverse rotation screw mechanism described above, the rear side screw is positioned in the direction opposite to the direction of the propulsive force generated by the front side screw with respect to the front side screw. Therefore, when the front side screw rotates, the rear side screw tends to become a large resistance to the air pushed by the front side screw. Therefore, with this double reverse rotation screw mechanism, it is difficult to achieve efficient flight during horizontal flight of an aircraft or the like.

### Citation List

### Patent Literature

PTL 1: Unexamined Japanese Patent Publication No. 2009-292439

### SUMMARY OF THE INVENTION

The present disclosure has been made in view of the above circumstances. An object of the present disclosure is to provide a motor unit and an aircraft capable of achieving both flight of the aircraft requiring a large propulsive force and efficient flight.

A motor unit according to one aspect of the present disclosure includes a stator, a first rotor, a first rotary wing, a second rotor, and a second rotary wing. The first rotor rotates by a magnetic force generated in the stator. The first rotary wing rotates about a first axial center that serves as a rotation center of the first rotor by the rotational force of the first rotor, and generates a propulsive force in a first direction parallel to the first axial center. The second rotor rotates by a magnetic force generated in the stator. The second rotary wing rotates about a second axial center that serves as a rotation center of the second rotor by the rotational force of the second rotor. The second rotary wing includes a rotator and a blade. The rotator rotates by a rotational force of the second rotor. The blade has a base end rotatably coupled to the rotator about a rotation axis intersecting the second axial center. The blade is rotationally movable in a first rotational position and a second rotational position. When the blade is at the first rotational position, the blade protrudes from the rotator to a direction intersecting the second axial center, and generates a propulsive force in the first direction when the second rotor rotates. When the blade is at the second rotational position, the tip end of the blade is positioned in a second direction opposite to the first direction relative to the tip end of the blade positioned at the first rotational position.

Preferably, the first rotor is positioned inside the stator, and the second rotor is positioned outside the stator.

Preferably, the motor unit further includes: a first shaft that transmits a rotational force of the first rotor to the first rotary wing; and a second shaft that transmits a rotational force of the second rotor to the second rotary wing, in which the second shaft is formed in a tubular shape, positioned around the first shaft, and rotatably supported by the first shaft.

Preferably, the number of pole pairs of the first rotor is smaller than the number of pole pairs of the second rotor.

Preferably, the number of pole pairs of the first rotor is 1/8, 1/4, or 1/2 of the number of pole pairs of the second rotor.

Preferably, the induced voltage generated by rotation of the first rotor is lower than the induced voltage generated by rotation of the second rotor.

Preferably, the induced voltage generated by rotation of the first rotor is from 1/8 to 1/2 inclusive of the induced voltage generated by rotation of the second rotor.

Preferably, the first rotary wing includes a first blade, and the length of the first blade is shorter than the length of a second blade, which is the blade of the second rotary wing.

Preferably, the length of the first blade is from 1/4 to 2/3 inclusive of the length of the second blade.

An aircraft according to one aspect of the present disclosure includes a body and the motor unit. The motor unit is attached to the body.

Preferably, the body includes a drive unit that changes the direction of the motor unit between a direction in which a direction of a propulsive force generated by the first rotary wing is upward and a direction in which a direction of a propulsive force generated by the first rotary wing is forward.

The motor unit and the aircraft according to one aspect can achieve both flight of the aircraft requiring a large propulsive force and efficient flight.

### BRIEF DESCRIPTION OF THE DRAWINGS

Fig. 1 is a perspective view of a motor unit according to an exemplary embodiment.
Fig. 2 is a partial cross-sectional view of the motor unit.
Fig. 3 is a perspective view of a motor unit in which a second blade included in the motor unit is at a first rotational position.
Fig. 4 is a top view of an aircraft including the motor unit.
Fig. 5 is a top view of another aircraft including the motor unit.

### DESCRIPTION OF EMBODIMENT

A motor unit and an aircraft of the present disclosure will be described below.

### (1) Exemplary embodiment

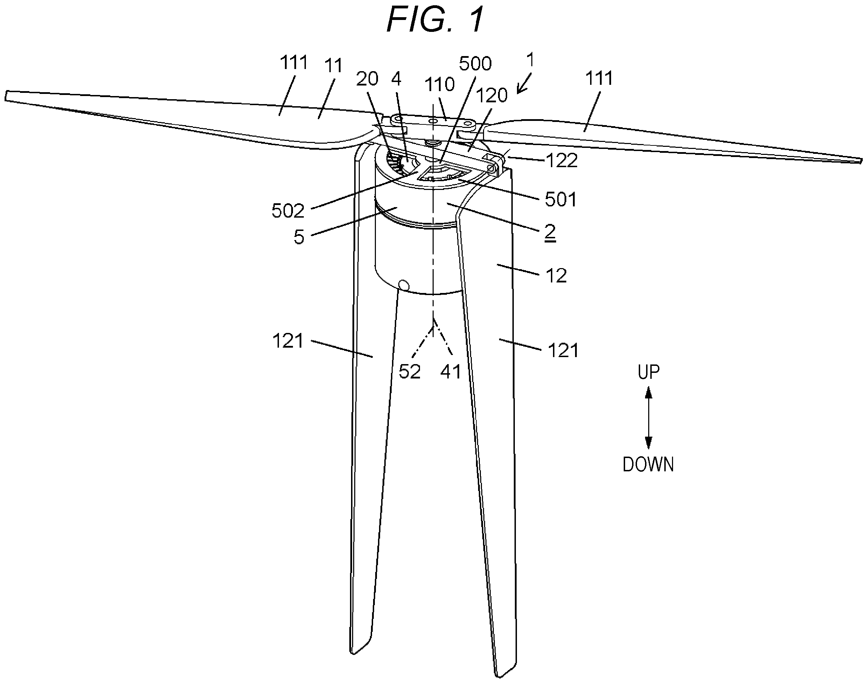

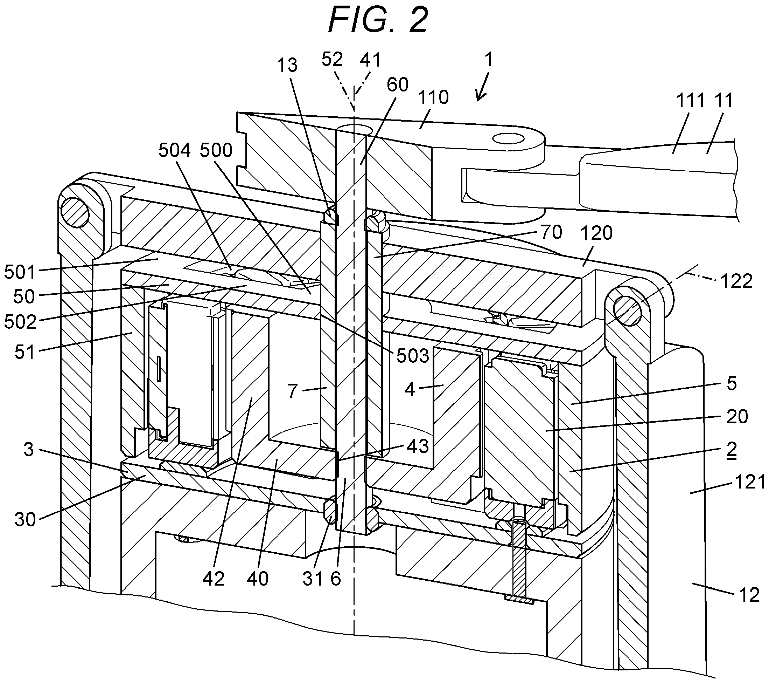

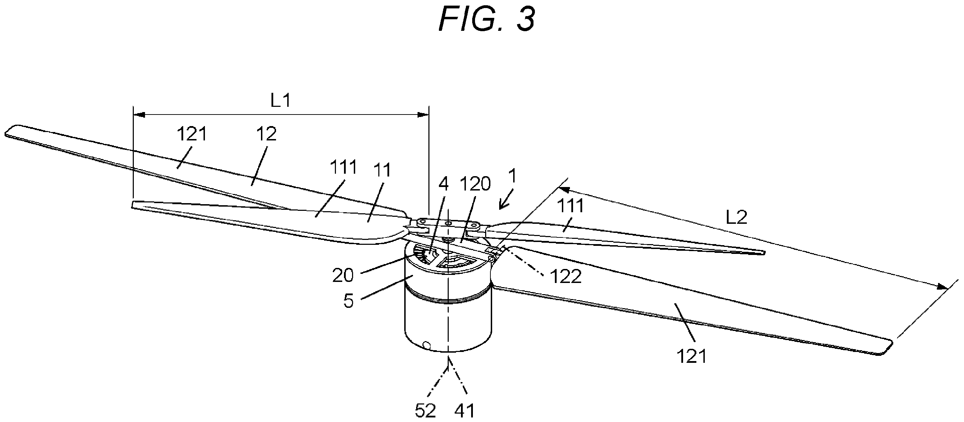

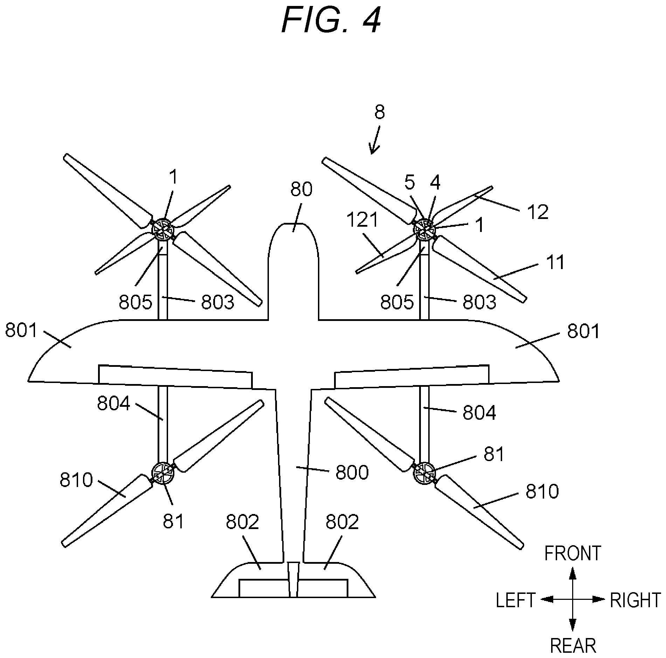

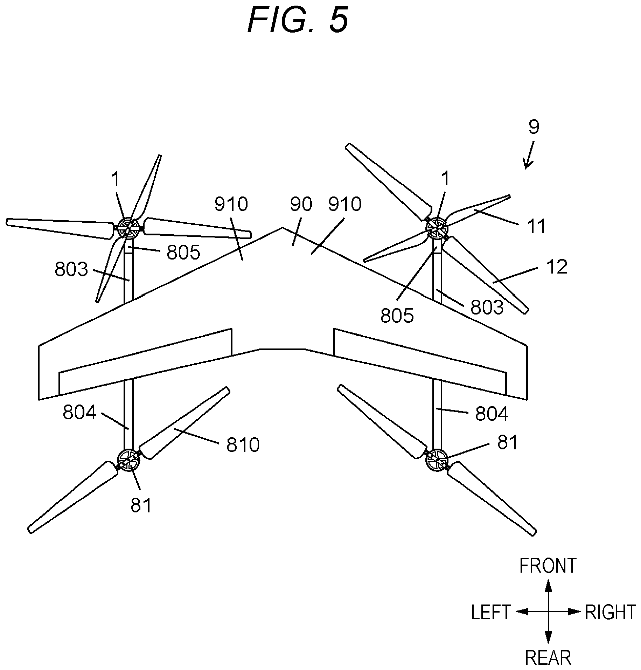

Fig. 1 is a perspective view of motor unit 1 according to an exemplary embodiment. Fig. 2 is a partial cross-sectional view of motor unit 1. Fig. 3 is a perspective view of motor unit 1 in which second blade 121 included in motor unit 1 is at the first rotational position. Motor unit 1 includes first rotor 4 and second rotor 5 that rotate using common stator 20. Motor unit 1 causes one rotary wing 11 of coaxially arranged two rotary wings 11 and 12 to rotate by the rotational force of first rotor 4, and other rotary wing 12 to rotate by the rotational force of second rotor 5. For example, as illustrated in Figs. 4 and 5, motor unit 1 is mounted on aircraft 8 or 9 as a rotor. Fig. 4 is a top view of aircraft 8 including motor unit 1 according to the exemplary embodiment. Fig. 5 is a top view of another aircraft 9 including motor unit 1. Motor unit 1 is used to obtain the propulsive force of aircraft 8 or 9.

As illustrated in Figs. 1 to 3, motor unit 1 includes motor 2, first rotary wing 11, and second rotary wing 12. Motor 2 is a brushless motor. Motor 2 includes stator 20, first rotor 4, and second rotor 5. First rotor 4 is an inner rotor in which a magnet included in first rotor 4 is positioned inside stator 20. Second rotor 5 is an outer rotor in which a magnet included in second rotor 5 is positioned around stator 20. First axial center 41, which is the rotation center of first rotor 4, and second axial center 52, which is the rotation center of second rotor 5, overlap with each other. The rotation direction of first rotor 4 and the rotation direction of second rotor 5 are the same.

As described above, first rotor 4 and second rotor 5 rotate by a magnetic force generated in common stator 20. Therefore, motor unit 1 can have a simplified control circuit, a simplified harness, a simplified bracket for attaching them, and the like. Therefore, it is possible to suppress an increase in weight of motor unit 1, and eventually it is possible to suppress an increase in weight of aircraft 8 or 9 and achieve efficient flight of aircraft 8 or 9.

First rotor 4 generates a rotational force for rotating first rotary wing 11. First rotary wing 11 rotates about first axial center 41 in the same direction as first rotor 4 together with first rotor 4, and generates a propulsive force in the first direction parallel to first axial center 41.

Second rotor 5 generates a rotational force for rotating second rotary wing 12. Second rotary wing 12 rotates about second axial center 52 in the same direction as second rotor 5 together with second rotor 5. Motor unit 1 will be described below assuming that a direction in which first axial center 41 extends is an up-and-down direction, the first direction is upward, and the second direction opposite to the first direction is downward unless otherwise specified. The direction and the direction used in the present disclosure do not limit the direction and the direction at the time of use of motor unit 1.

As illustrated in Fig. 2, motor unit 1 further includes base 3. Base 3 includes flat plate-shaped base plate 30 whose thickness direction is parallel to the up-and-down direction. Base plate 30 is formed in a circular shape as viewed from the up-and-down direction.

Stator 20 is along an upper face, which is one surface in the thickness direction of base plate 30. Stator 20 is fixed to base plate 30. Stator 20 is fixed to base plate 30 by a fixing tool such as a screw, for example. Stator 20 is formed in an annular shape as viewed from the up-and-down direction. Stator 20 is formed in an annular shape concentric with base plate 30. Stator 20 includes, for example, a stator core and a stator coil wound around the stator core. Stator 20 generates a magnetic force for rotating first rotor 4 and second rotor 5 by energizing the stator coil.

Motor unit 1 further includes two shafts 6 and 7. First shaft 6 of two shafts 6 and 7 transmits the rotational force of first rotor 4 to first rotary wing 11 to rotate first rotary wing 11. Second shaft 7 transmits the rotational force of second rotor 5 to second rotary wing 12 to rotate second rotary wing 12 in the same direction as first rotary wing 11.

First shaft 6 is formed in a columnar shape extending in the up-and-down direction. First shaft 6 is rotatably attached to base plate 30. Base 3 further includes bearing 31 attached to the center of base plate 30. The lower end of first shaft 6 is restricted in movement in the up-and-down direction by bearing 31 and is supported rotatably about the central axis of first shaft 6. Base plate 30 may include a part that restricts movement of first shaft 6 in the up-and-down direction and rotatably supports first shaft 6 about the central axis of first shaft 6. In this case, bearing 31 can be omitted.

First rotor 4 is formed in a bottomed cylindrical shape (cup shape) opened upward. First rotor 4 is positioned inside stator 20. However, first rotor 4 is not in contact with stator 20.

First rotor 4 has bottom 40 and peripheral wall 42. Bottom 40 is formed in a plate shape whose thickness direction is parallel to the up-and-down direction. The lower face of bottom 40 is along the upper face of base plate 30. However, first rotor 4 is not in contact with base plate 30. Fitting hole 43 penetrating in the up-and-down direction is formed at the center of bottom 40.

First shaft 6 passes through fitting hole 43 of first rotor 4 and penetrates bottom 40 in the up-and-down direction. Bottom 40 of first rotor 4 is fixed to first shaft 6. Bottom 40 is fixed to first shaft 6, for example, by press-fitting first shaft 6 into fitting hole 43. A means for fixing first rotor 4 to first shaft 6 is not limited. For example, first rotor 4 may be fixed to first shaft 6 by adhesion or the like. First axial center 41 of first rotor 4 overlaps the central axis of first shaft 6. The rotation center of first rotor 4 is defined by first shaft 6. First rotor 4 rotates about the central axis of first shaft 6 together with first shaft 6.

Peripheral wall 42 of first rotor 4 protrudes upward from the peripheral edge of bottom 40. Peripheral wall 42 is formed in a cylindrical shape whose central axis direction is parallel to the up-and-down direction. The outer peripheral surface of peripheral wall 42 opposes the inner peripheral surface of stator 20 with a slight gap interposed therebetween.

Peripheral wall 42 includes, for example, a plurality of magnets arranged in the circumferential direction of first rotor 4 (circumferential direction of peripheral wall 42) or one magnet continuous in the circumferential direction of first rotor 4. The plurality of magnets are arranged such that, for example, magnetic poles on stator 20 side of two adjacent magnets are different. The one magnet is magnetized such that, for example, magnetic poles positioned on stator 20 side are alternated in the circumferential direction of first rotor 4.

First rotor 4 rotates about first axial center 41 of first rotor 4 by magnetic attractive force and repulsive force generated between the magnetic field formed by stator 20 and the plurality of or one magnet. As first rotor 4 rotates in this manner, first rotary wing 11 fixed to first shaft 6 rotates about first axial center 41 of first rotor 4.

Second shaft 7 is positioned above bottom 40 of first rotor 4. Second shaft 7 is formed in a cylindrical shape extending in the up-and-down direction. Second shaft 7 is positioned around first shaft 6. Second shaft 7 is supported rotatably about the central axis of first shaft 6 by first shaft 6.

When the lower end face of second shaft 7 comes into contact with bottom 40 of first rotor 4, downward movement of second shaft 7 is restricted. Stopper 13 positioned above second shaft 7 is fixed to first shaft 6, and when the upper end face of second shaft 7 comes into contact with stopper 13, upward movement of second shaft 7 is restricted.

Second rotor 5 is formed in a covered cylindrical shape (cup shape) opened downward. Second rotor 5 covers stator 20 and first rotor 4 from above in a non-contact state. Second rotor 5 includes lid 50 and peripheral wall 51. Lid 50 is formed in a plate shape whose thickness direction is parallel to the up-and-down direction. Lid 50 is positioned above stator 20 and first rotor 4. Lid 50 opposes the upper face of stator 20 with a gap interposed therebetween.

Lid 50 includes center 500, peripheral edge 501, and a plurality of connecting parts 502. Center 500 is positioned at the center of lid 50 as viewed from the up-and-down direction, and is positioned above a space formed inside annular stator 20. Fitting hole 503 penetrating in the up-and-down direction is formed at the center of center 500 (center of lid 50).

Second shaft 7 passes through fitting hole 503 of second rotor 5 and penetrates lid 50 in the up-and-down direction. Lid 50 of second rotor 5 is fixed to second shaft 7. Lid 50 is fixed to second shaft 7, for example, by press-fitting second shaft 7 into fitting hole 503. A means for fixing second rotor 5 to second shaft 7 is not limited. For example, second rotor 5 may be fixed to second shaft 7 by adhesion or the like. Second axial center 52 of second rotor 5 overlaps the central axis of first shaft 6 and the central axis of second shaft 7. The rotation center of second rotor 5 is defined by first shaft 6 and second shaft 7. Second rotor 5 rotates about the central axis of first shaft 6 together with second shaft 7 in the same direction as first rotor 4.

Peripheral edge 501 of lid 50 is formed in an annular shape as viewed from the up-and-down direction. Peripheral edge 501 is positioned around center 500 at an interval from center 500. The plurality of connecting parts 502 are arranged at intervals in the circumferential direction of second rotor 5 (circumferential direction of peripheral edge 501) between center 500 and peripheral edge 501. The plurality of connecting parts 502 connect center 500 and peripheral edge 501.

A plurality of holes 504 arranged in the circumferential direction of second rotor 5 are formed in lid 50. Each hole 504 is formed between connecting parts 502 adjacent to each other in the circumferential direction of second rotor 5. Each hole 504 penetrates lid 50 in the up-and-down direction. The plurality of holes 504 cause the space above lid 50 to communicate with the space inside second rotor 5 (space surrounded by peripheral wall 51) positioned below lid 50. Therefore, heat generated in stator 20 hardly stays inside second rotor 5.

Peripheral wall 51 of second rotor 5 protrudes downward (stator 20 side) from peripheral edge 501 of lid 50. Peripheral wall 51 is formed in a cylindrical shape whose central axis direction is parallel to the up-and-down direction. The inner peripheral surface of peripheral wall 51 opposes the outer peripheral surface of stator 20 with a slight gap interposed therebetween.

Peripheral wall 51 includes, for example, a plurality of magnets arranged in the circumferential direction of second rotor 5 or one magnet continuous in the circumferential direction of second rotor 5. The plurality of magnets of second rotor 5 are arranged such that, for example, magnetic poles on stator 20 side of two adjacent magnets are different. The one magnet of second rotor 5 is magnetized such that, for example, magnetic poles positioned on stator 20 side are alternated in the circumferential direction of second rotor 5. Second rotor 5 is caused to rotate about second axial center 52 of second rotor 5 by magnetic attractive force and repulsive force generated between the magnetic field formed by stator 20 and the plurality of or one magnet.

Second shaft 7 includes protrusion 70 protruding upward relative to center 500 of second rotor 5. Second rotary wing 12 is coupled to protrusion 70. First shaft 6 includes protrusion 60 protruding upward relative to second shaft 7. First rotary wing 11 is coupled to protrusion 60. First rotary wing 11 is positioned above second rotary wing 12. First rotary wing 11, second rotary wing 12, second rotor 5, and stator 20 are arranged in this order toward the up-and-down direction.

As illustrated in Fig. 1, first rotary wing 11 includes rotator 110 and a plurality of blades 111. Hereinafter, rotator 110 is called first rotator 110, and blade 111 is called first blade 111. First rotator 110 is fixed to protrusion 60 (see Fig. 2) of first shaft 6. First rotator 110 rotates about the central axis of first shaft 6 together with first shaft 6.

First rotary wing 11 includes a total of two first blades 111. Each first blade 111 is a plate-shaped blade extending in a direction intersecting the up-and-down direction. In each first blade 111, a base end (one end in the length direction) is coupled to first rotator 110 rotatably about a rotation axis parallel to the up-and-down direction. Each first blade 111 protrudes in a direction intersecting the up-and-down direction from first rotator 110. Specifically, each first blade 111 extends in a direction substantially orthogonal to the up-and-down direction. Each first blade 111 may be fixed to first rotator 110 and may be impossible to rotate with respect to first rotator 110.

When first rotor 4 rotates about first axial center 41, each first blade 111 rotates about the central axis of first shaft 6 together with first shaft 6 and first rotator 110. This causes first rotary wing 11 to generate an upward propulsive force. The number of first blades 111 included in first rotary wing 11 is not limited. For example, first rotary wing 11 may include only one first blade 111, or may include three or more first blades 111.

Second rotary wing 12 includes rotator 120 and a plurality of blades 121. Hereinafter, rotator 120 is called second rotator 120, and blade 121 is called second blade 121. Second rotator 120 is fixed to protrusion 70 (see Fig. 2) of second shaft 7. Second rotator 120 rotates about the central axis of second shaft 7 together with second shaft 7.

Second rotary wing 12 includes a total of two second blades 121. Each second blade 121 is a plate-shaped wing extending in a direction intersecting the rotation direction of second rotator 120. The number of second blades 121 included in second rotary wing 12 is not limited. For example, second rotary wing 12 may include only one second blade 121, or may include three or more second blades 121.

In each second blade 121, a base end (one end in the length direction) is coupled to second rotator 120 rotatably about rotation axis 122 parallel to a direction intersecting the up-and-down direction. Each second blade 121 is positioned outside relative to second rotor 5 as viewed from the up-and-down direction. Each second blade 121 is coupled to second rotator 120 at a positioned outside relative to second rotor 5. Rotation axis 122 of each second blade 121 is parallel to the rotation direction of second rotator 120, but may be non-parallel to the rotation direction of second rotator 120.

Each second blade 121 is rotationally movable in the first rotational position illustrated in Fig. 3 and the second rotational position illustrated in Fig. 1 by rotating about rotation axis 122 with respect to second rotator 120. Each second blade 121 rotationally moves to the first rotational position and the second rotational position by the centrifugal force acting at the time of rotation of second blade 121 about second axial center 52, and the drag, the inertial force, the gravity, and the like acting on second blade 121 at the time of flight of aircraft 8 or 9.

Each second blade 121 protrudes in a direction intersecting second axial center 52 from second rotator 120 when at the first rotation position illustrated in Fig. 3. Each second blade 121 is along a virtual plane orthogonal to the up-and-down direction in a state of being disposed at the first rotational position. When each second blade 121 is at the second rotational position illustrated in Fig. 1, the tip end is positioned downward relative to the tip end of second blade 121 when positioned at the first rotational position. Each second blade 121 is along a virtual plane parallel to the up-and-down direction in a state of being disposed at the second rotational position. Each second blade 121 is along the outer peripheral surface of second rotor 5 in a state of being disposed at the second position. The range in which each second blade 121 can rotate about rotation axis 122 may be restricted by second rotator 120 or needs not be restricted.

When first rotor 4 and second rotor 5 rotate about axial centers 41 and 52 in a state where each second blade 121 is at the first rotational position illustrated in Fig. 3, each second blade 121 generates a propulsive force in the same direction (upward) as the direction of the propulsive force generated by first rotary wing 11. In this case, motor unit 1 can generate a large propulsive force by first rotary wing 11 and second rotary wing 12. Therefore, the state in which each second blade 121 is positioned at the first rotational position is suitable for flight requiring a large propulsive force of aircraft 8 or 9 such as at the time of vertical takeoff and landing and at the time of hovering.

As illustrated in Fig. 1, when first rotor 4 and second rotor 5 rotate about axial centers 41 and 52 in the state where each second blade 121 is positioned at the second rotational position, the length direction of each second blade 121 becomes substantially parallel to the up-and-down direction. Therefore, each second blade 121 is less likely to become a large resistance to the air pushed to second rotary wing 12 side by first rotary wing 11. Therefore, in a state where each second blade 121 is positioned at the second rotational position, aircraft 8 or 9 can efficiently fly at a high speed.

Preferably, the number of pole pairs of first rotor 4 is smaller than the number of pole pairs of second rotor 5. In this case, when first rotor 4 and second rotor 5 are rotated by stator 20, the rotational speed of first rotor 4 can be made larger than the rotational speed of second rotor 5, and the rotational speed of first rotary wing 11 can be made larger than the rotational speed of second rotary wing 12. Therefore, in the state where each second blade 121 is positioned at the first rotational position illustrated in Fig. 3, the propulsive force of aircraft 8 or 9 can be increased, and in the state where each second blade 121 is positioned at the second rotational position illustrated in Fig. 1, the flight speed of aircraft 8 or 9 can be increased.

More preferably, the number of pole pairs of first rotor 4 is 1/8, 1/4, or 1/2 of the number of pole pairs of second rotor 5. In this case, in the state where each second blade 121 is positioned at the second rotational position illustrated in Fig. 1, it is possible to generate sufficient propulsive force while increasing the flight speed of aircraft 8 or 9. The number of pole pairs of first rotor 4 of the present exemplary embodiment is 1/4. Since first rotor 4 is an inner rotor positioned inside stator 20 and second rotor 5 is an outer rotor positioned around stator 20, the number of pole pairs of second rotor 5 can be easily made larger than the number of pole pairs of first rotor 4. The number of pole pairs of first rotor 4 may be less than 1/8 of the number of pole pairs of second rotor 5. The number of pole pairs of first rotor 4 may be the same as the number of pole pairs of second rotor 5, or may be larger than the number of pole pairs of second rotor 5.

In the present exemplary embodiment, first rotor 4 is an inner rotor and second rotor 5 is an outer rotor. However, first rotor 4 and second rotor 5 may be outer rotors. First rotor 4 and second rotor 5 may be inner rotors. In this case, for example, first rotor 4 and second rotor 5 are arranged side by side in the extending direction of first axial center 41. First rotor 4 may be an outer rotor, and second rotor 5 may be an inner rotor.

The induced voltage (hereinafter, referred to as first induced voltage) induced in the stator coil by rotation of first rotor 4 is preferably lower than the induced voltage (hereinafter, referred to as second induced voltage) induced in the stator coil by rotation of second rotor 5. Also in this case, the rotational speed of first rotary wing 11 can be made larger than the rotational speed of second rotary wing 12. Therefore, in the state where each second blade 121 is positioned at the first rotational position illustrated in Fig. 3, the propulsive force of aircraft 8 or 9 can be increased. In the state where each second blade 121 is positioned at the second rotational position illustrated in Fig. 1, the flight speed of aircraft 8 or 9 can be increased. The first induced voltage and the second induced voltage can be adjusted, for example, by adjusting the lengths of rotors 4 and 5 in the up-and-down direction, the magnetic force of the magnets included in rotors 4 and 5, the positions of rotors 4 and 5 in the up-and-down direction, and the like.

The first induced voltage is more preferably from 1/8 to 1/2 inclusive of the second induced voltage. In this case, at the time of flight of aircraft 8 or 9 in the state where each second blade 121 is positioned at the second rotational position, it is possible to generate sufficient propulsive force while increasing the flight speed of aircraft 8 or 9. As a preferred example, the first induced voltage is preferably about 1/4 of the second induced voltage. The first induced voltage may be less than 1/8 of the second induced voltage. The first induced voltage may be equal to or higher than the second induced voltage.

As illustrated in Fig. 3, preferably, length L1 of each first blade 111 is shorter than length L2 of each second blade 121. Also in this case, the rotational speed of first rotary wing 11 can be made larger than the rotational speed of second rotary wing 12. Therefore, in the state where each second blade 121 is positioned at the first rotational position, the propulsive force of aircraft 8 or 9 can be increased. In the state where each second blade 121 is positioned at the second rotational position, the flight speed of aircraft 8 or 9 can be increased.

Length L1 of each first blade 111 is more preferably from 1/4 to 2/3 inclusive of length L2 of each second blade 121. In this case, at the time of flight of aircraft 8 or 9 in the state where each second blade 121 is positioned at the second rotational position, it is possible to generate sufficient propulsive force while increasing the flight speed of aircraft 8 or 9. As a preferred example, length L1 of each first blade 111 is preferably about 1/3 of length L2 of each second blade 121. Length L 1 of each first blade 111 may be the same as length L2 of each second blade 121, or may be longer than length L2 of each second blade 121.

Fig. 4 illustrates aircraft 8 including motor unit 1. Aircraft 8 is a vertical takeoff and landing aircraft including a fixed wing. Aircraft 8 is, for example, an unmanned airplane that can perform autonomous flight or remotely controlled flight. Aircraft 8 is large and can be used for agrochemical spraying, transportation, or the like. The size of aircraft 8 is not limited. Aircraft 8 may be a manned airplane.

Aircraft 8 includes body 80, a plurality of motor units 1, and a plurality of single rotors 81. Body 80 includes fuselage 800 and a plurality of fixed wings 801 and 802 continuous to fuselage 800. Body 80 includes a pair of left and right main wings 801 and a pair of left and right empennages 802 as a plurality of fixed wings.

Aircraft 8 includes the plurality of motor units 1 and the plurality of single rotors 81 as a plurality of rotors. That is, aircraft 8 includes motor unit 1 used as a double reverse rotation type rotor and single rotor 81 that rotates only one rotary wing 810. Aircraft 8 includes two motor units 1 and two single rotors 81. Each motor unit 1 is used to generate upward and forward propulsive force, and each single rotor 81 is used to generate upward propulsive force. The number of the motor units 1 and the number of the single rotors 81 included in aircraft 8 are not limited.

Body 80 further includes a plurality of arms 803 and 804. Body 80 includes the same number of arms 803 and 804 as the number of rotors included in aircraft 8 (the number in which the number of motor units 1 and the number of single rotors 81 are added). Body 80 includes a pair of left and right front arms 803 and a pair of left and right rear arms 804 as the plurality of arms 803 and 804.

The pair of left and right front arms 803 are attached to the pair of left and right main wings 801, respectively. Each front arm 803 protrudes forward from main wing 801. Motor unit 1 is attached to the front end of each front arm 803.

Each front arm 803 includes drive unit 805 that rotationally drives motor unit 1. By using a driving force generated by a drive source such as a motor, drive unit 805 of each front arm 803 rotates motor unit 1 about a rotation axis that intersects the up-and-down direction and intersects the front-and-rear direction. That is, motor unit 1 is a prop rotor, and aircraft 8 is a tilt rotor machine.

By rotationally driving motor unit 1 with respect to front arm 803, drive unit 805 of each front arm 803 changes the direction of motor unit 1 to a third direction (upward) in which first rotary wing 11 is positioned above second rotary wing 12 and a fourth direction (forward) in which first rotary wing 11 is positioned in front of second rotary wing 12.

When each motor unit 1 is oriented in the third direction, first rotary wing 11 is along a horizontal plane as illustrated in Fig. 4, and first axial center 41 of first rotor 4 intersects the horizontal plane. In this case, first rotary wing 11 generates upward propulsive force when first rotor 4 rotates.

When each motor unit 1 is oriented in the fourth direction, first rotary wing 11 is along a vertical plane orthogonal to the front-and-rear direction, and first axial center 41 of first rotor 4 intersects the vertical plane orthogonal to the front-and-rear direction. In this case, first rotary wing 11 generates a forward propulsive force when first rotor 4 rotates. The direction of each motor unit 1 is changed by rotating with respect to front arm 803, but may be changed to the third direction and the fourth direction by front arm 803 rotating with respect to main wing 801. The direction of each motor unit 1 may be changed to the third direction and the fourth direction by each motor unit 1 being attached to main wing 801 and main wing 801 being inclined with respect to fuselage 800. That is, aircraft 8 may be a tilt wing machine.

The pair of left and right rear arms 804 are attached to left and right main wings 801, respectively. Each rear arm 804 protrudes rearward from main wing 801. Single rotor 81 is attached to a rear end of each rear arm 804.

Each single rotor 81 is fixed to rear arm 804. Rotary wing 810 of each single rotor 81 rotates about a rotation axis extending in a direction intersecting the horizontal plane. In each single rotor 81, when single rotor 81 is driven, rotary wing 810 rotates along the horizontal plane and generates an upward propulsive force. Similarly to motor unit 1, each single rotor 81 may be attached to body 80 changeably between a direction in which the propulsive force is generated upward and a direction in which the propulsive force is generated forward.

Body 80 further includes a flight controller and a power source. The flight controller includes, for example, a control device and a plurality of sensors. The control device is, for example, a microcontroller, and includes a processor and a memory as hardware. The control device controls the flight of aircraft 8 by the processor executing a program recorded in the memory. The plurality of sensors can include an acceleration sensor, a gyro sensor, a geomagnetic sensor, an atmospheric pressure sensor (altimeter), a global positioning system (GPS) sensor, and an image sensor. Based on data acquired by the plurality of sensors, the control device controls the plurality of motor units 1 and the plurality of single rotors 81, and controls a flight direction, a flight speed, a flight attitude, and the like of aircraft 8.

Control of the plurality of motor units 1 and the plurality of single rotors 81 by the flight controller is performed through an electric speed controller (ESC), for example. The ESC may be included in body 80, or may be included in motor unit 1 or single rotor 81.

The power source supplies power to the flight controller, the plurality of motor units 1, the plurality of single rotors 81, and the like. The power source is a rechargeable battery such as, for example, a lithium polymer battery, a lithium ion battery, or a nickel hydrogen battery. Body 80 may further include a remote controller and a camera device. Body 80 may further include a communication device that communicates with an external device such as a personal computer.

When aircraft 8 flies in the up-and-down direction such as takeoff and landing or performs hovering, the control device drives the plurality of motor units 1 and the plurality of single rotors 81 with the direction of each motor unit 1 set to the third direction as illustrated in Fig. 4. Then, in each motor unit 1, first rotor 4, first rotary wing 11, second rotor 5, and second rotary wing 12 rotate about a rotation axis intersecting the horizontal plane. In this case, each second blade 121 of second rotary wing 12 rotationally moves to the first rotational position illustrated in Fig. 3 by centrifugal force, and rotates about second axial center 52 of second rotor 5 in a state of being positioned at this first rotational position. Therefore, in aircraft 8, an upward propulsive force due to rotation of first rotary wing 11 of each motor unit 1, an upward propulsive force due to rotation of second rotary wing 12 of each motor unit 1, and an upward propulsive force due to rotation of the rotary wing of each single rotor 81 are generated. Accordingly, aircraft 8 can fly in the up-and-down direction with sufficient propulsive force.

When aircraft 8 flies in the lateral direction such as horizontal flight, the control device stops the driving of each single rotor 81, and drives the plurality of motor units 1 with the direction of each motor unit 1 set to the fourth direction. Then, in each motor unit 1, first rotor 4, first rotary wing 11, second rotor 5, and second rotary wing 12 rotate about a rotation axis intersecting a vertical plane perpendicular to the front-and-rear direction. In this case, each second blade 121 of second rotary wing 12 rotationally moves to the second rotational position illustrated in Fig. 1 by the drag and the inertial force, and becomes substantially parallel to first axial center 41 of first rotor 4 parallel to the front-and-rear direction. Therefore, each second blade 121 of second rotary wing 12 is less likely to become a large resistance to the air pushed backward by first rotary wing 11 rotating together with first rotor 4. Accordingly, aircraft 8 can efficiently fly at a high speed.

Instead of single rotor 81, motor unit 1 may be attached to each rear arm 804. That is, motor unit 1 may be attached to all arms 803 and 804. Instead of motor unit 1, single rotor 81 may be attached to each front arm 803, and instead of single rotor 81, motor unit 1 may be attached to each rear arm 804. In the case where motor unit 1 is attached to each rear arm 804 in this manner, each rear arm 804 includes drive unit 805 similar to that in front arm 803. That is, in motor unit 1 attached to each rear arm 804, similarly to motor unit 1 attached to front arm 803, the direction of motor unit 1 is changed to the third direction and the fourth direction by drive unit 805.

Fig. 5 illustrates another aircraft 9 including motor unit 1. Aircraft 9 has elements common to aircraft 8 illustrated in Fig. 4. Therefore, the description of matters of aircraft 9 overlapping with matters of aircraft 8 in will be omitted below.

Body 90 of aircraft 9 include only a pair of left and right fixed wings 910 connected to each other as fixed wings. Similarly to the pair of left and right main wings 801 of aircraft 8 illustrated in Fig. 4, to the pair of left and right fixed wings 910, two motor units 1 are attached via two front arms 803, and two single rotors 81 are attached via two rear arms 804.

### (2) Aspects

As is obvious from the exemplary embodiment described above, motor unit (1) of a first aspect has the following configuration. Motor unit (1) includes stator (20), first rotor (4), first rotary wing (11), second rotor (5), and second rotary wing (12). First rotor (4) rotates by a magnetic force generated in stator (20). First rotary wing (11) rotates about first axial center (41), which serves as a rotation center of first rotor (4), by the rotational force of first rotor (4), and generates a propulsive force in the first direction parallel to first axial center (41). Second rotor (5) rotates by a magnetic force generated in stator (20). Second rotary wing (12) rotates about second axial center (52), which serves as a rotation center of second rotor (5), by the rotational force of second rotor (5). Second rotary wing (12) includes the rotator (second rotator 120) and the blade (second blade 121). Rotator (120) rotates by the rotational force of second rotor (5). Blade (121) has the base end rotatably coupled to rotator (120) about rotation axis (122) intersecting second axial center (52). Blade (121) is rotationally movable in the first rotational position and the second rotational position. When blade (121) is at the first rotational position, blade (121) protrudes in the direction intersecting second axial center (52) from rotator (120), and generates a propulsive force in the first direction when second rotor (5) rotates. When blade (121) is at the second rotational position, the tip end of blade (121) is positioned in the second direction opposite to the first direction relative to the tip end of blade (121) positioned at the first rotational position.

According to this aspect, first rotor (4) and second rotor (5) can rotate by stator (20) in the state where second blade (121) is positioned at the first rotational position. In this case, second blade (121) generates a propulsive force in the same direction as the direction of the propulsive force generated by first rotary wing (11). Therefore, motor unit (1) can generate a large propulsive force, and aircraft (8 or 9) can fly with a large propulsive force. When first rotor (4) rotates by stator (20) in a state where second blade (121) is positioned at the second rotational position, second blade (121) is less likely to become a large resistance to the air pushed to second rotary wing (12) side by first rotary wing (11). Therefore, aircraft (8 or 9) can fly efficiently and at a high speed.

A second aspect can be achieved in combination with the first aspect. The second aspect has the following configuration. First rotor (4) is positioned inside stator (20). Second rotor (5) is positioned outside stator (20).

According to this aspect, first rotor (4), which is an inner rotor, can be easily designed as a rotor for high speed and low load. Second rotor (5), which is an outer rotor, can be easily designed as a rotor for low speed and high load.

A third aspect can be achieved in combination with the first or second aspect. The third aspect has the following configuration. Motor unit (1) further includes first shaft (6) and second shaft (7). First shaft (6) transmits the rotational force of first rotor (4) to first rotary wing (11). Second shaft (7) transmits the rotational force of second rotor (5) to second rotary wing (12). Second shaft (7) is formed in a tubular shape, positioned around first shaft (6), and rotatably supported by first shaft (6).

According to this aspect, it is possible to support second shaft (7) by using first shaft (6), which transmits the rotational force of first rotor (4) to first rotary wing (11). Therefore, it is possible to suppress an increase in weight of motor unit (1). Eventually, it is possible to suppress an increase in weight of aircraft (8 or 9) and achieve efficient flight of aircraft (8 or 9).

A fourth aspect can be achieved in combination with any one of the first to third aspects. The number of pole pairs of first rotor (4) of the fourth aspect is smaller than the number of pole pairs of second rotor (5).

According to this aspect, it is possible to make the rotational speed of first rotor (4) greater than the rotational speed of second rotor (5). The rotational speed of first rotary wing (11) can be made greater than the rotational speed of second rotary wing (12). Therefore, in the state where second blade (121) is positioned at the first rotational position, the propulsive force of aircraft (8 or 9) can be increased. Moreover, in the state where second blade (121) is positioned at the second rotational position, the flight speed of aircraft (8 or 9) can be increased.

A fifth aspect can be achieved in combination with the fourth aspect. The number of pole pairs of first rotor (4) of the fifth aspect is 1/8, 1/4, or 1/2 of the number of pole pairs of second rotor (5).

According to this aspect, it is possible to generate sufficient propulsive force while increasing the flight speed of aircraft (8 or 9) at the time of flight of aircraft (8 or 9) in the state where second blade (121) is positioned at the second rotational position.

A sixth aspect can be achieved in combination with any one of the first to fifth aspects. The induced voltage generated by rotation of first rotor (4) of the sixth aspect is lower than the induced voltage generated by rotation of second rotor (5).

According to this aspect, it is possible to make the rotational speed of first rotor (4) greater than the rotational speed of second rotor (5). The rotational speed of first rotary wing (11) can be made greater than the rotational speed of second rotary wing (12). Therefore, in the state where second blade (121) is positioned at the first rotational position, the propulsive force of aircraft (8 or 9) can be increased. Moreover, in the state where second blade (121) is positioned at the second rotational position, the flight speed of aircraft (8 or 9) can be increased.

A seventh aspect can be achieved in combination with the sixth aspect. The induced voltage generated by rotation of first rotor (4) of the seventh aspect is from 1/8 to 1/2 inclusive of the induced voltage generated by rotation of second rotor (5).

According to this aspect, it is possible to generate sufficient propulsive force while increasing the flight speed of aircraft (8 or 9) at the time of flight of aircraft (8 or 9) in the state where second blade (121) is positioned at the second rotational position.

An eighth aspect can be achieved in combination with any one of the first to seventh aspects. The eighth aspect has the following configuration. First rotary wing (11) includes a first blade. Length (L1) of first blade (111) is shorter than length (L2) of second blade (121), which is blade (121) of second rotary wing (12).

According to this aspect, it is possible to make the rotational speed of first rotor (4) greater than the rotational speed of second rotor (5). The rotational speed of first rotary wing (11) can be made greater than the rotational speed of second rotary wing (12). Therefore, in the state where second blade (121) is positioned at the first rotational position, the propulsive force of aircraft (8 or 9) can be increased. Moreover, in the state where second blade (121) is positioned at the second rotational position, the flight speed of aircraft (8 or 9) can be increased.

A ninth aspect can be achieved in combination with the eighth aspect. Length (L1) of first blade (111) of the ninth aspect is from 1/4 to 2/3 inclusive of length (L2) of second blade (121).

According to this aspect, it is possible to generate sufficient propulsive force while increasing the flight speed of aircraft (8 or 9) at the time of flight of aircraft (8 or 9) in the state where second blade (121) is positioned at the second rotational position.

In a tenth aspect, aircraft (8 or 9) has the following configuration. Aircraft (8 or 9) includes motor unit (1) and body (80 or 90). Motor unit (1) is motor unit (1) of any one of the first to ninth aspects. Motor unit (1) is attached to body (80 or 90).

According to this aspect, by switching the position of second blade (121) of motor unit (1) between the first rotational position and the second rotational position, it is possible to perform a flight that generates a large propulsive force and a flight that is efficient and at a high speed.

An eleventh aspect can be achieved in combination with the tenth aspect. Body (80 or 90) of the eleventh aspect includes drive unit (805). Drive unit (805) changes the direction of motor unit (1) between a direction (third direction) in which the direction of the propulsive force generated by first rotary wing (11) becomes upward and a direction (fourth direction) in which the direction of the propulsive force generated by first rotary wing (11) becomes forward.

According to this aspect, aircraft (8 or 9) can generate a large propulsive force to perform flight in the up-and-down direction by setting the direction of motor unit (1) to the third direction by drive unit (805). Aircraft (8 or 9) can efficiently fly at a high speed by setting the direction of motor unit (1) to the fourth direction by drive unit (805).

### INDUSTRIAL APPLICABILITY

Motor unit (1) and aircraft (8 or 9) of the present disclosure can be used in various fields such as household toys in addition to industries such as agriculture, transportation, and services.

### REFERENCE MARKS IN THE DRAWINGS

1: motor unit
11: first rotary wing
111: first blade (blade)
12: second rotary wing
120: second rotator (rotator)
121: second blade (blade)
122: rotation axis
20: stator
4: first rotor
41: first axial center
5: second rotor
52: second axial center
6: first shaft
7: second shaft
8: aircraft
80: body
805: drive unit
9: aircraft
90: body
L1: length of first blade
L2: length of second blade

## Claims

1. A motor unit comprising:
a stator;
a first rotor that rotates by a magnetic force generated in the stator;
a first rotary wing that rotates about a first axial center that serves as a rotation center of the first rotor by a rotational force of the first rotor to generate a propulsive force in a first direction parallel to the first axial center;
a second rotor that rotates by a magnetic force generated in the stator; and
a second rotary wing that rotates about a second axial center that serves as a rotation center of the second rotor by a rotational force of the second rotor,
wherein the second rotary wing includes
a rotator that rotates by a rotational force of the second rotor, and
a blade having a base end rotatably coupled to the rotator about a rotation axis intersecting the second axial center, and
the blade is rotationally movable in
a first rotational position that protrudes in a direction intersecting the second axial center from the rotator, the first rotational position generating a propulsive force in the first direction when the second rotor rotates, and
a second rotational position where a tip end of the blade is positioned in a second direction opposite to the first direction relative to a tip end of the blade positioned in the first rotational position.

2. The motor unit according to Claim 1, wherein
the first rotor is positioned inside the stator, and
the second rotor is positioned outside the stator.

3. The motor unit according to Claim 1 or 2, further comprising:
a first shaft that transmits a rotational force of the first rotor to the first rotary wing; and
a second shaft that transmits a rotational force of the second rotor to the second rotary wing,
wherein the second shaft is formed in a tubular shape, positioned around the first shaft, and rotatably supported by the first shaft.

4. The motor unit according to any one of Claims 1 to 3, wherein a number of pole pairs of the first rotor is smaller than a number of pole pairs of the second rotor.

5. The motor unit according to Claim 4, wherein the number of pole pairs of the first rotor is 1/8, 1/4, or 1/2 of the number of pole pairs of the second rotor.

6. The motor unit according to any one of Claims 1 to 5, wherein an induced voltage generated by rotation of the first rotor is lower than an induced voltage generated by rotation of the second rotor.

7. The motor unit according to Claim 6, wherein the induced voltage generated by the rotation of the first rotor is from 1/8 to 1/2, inclusive, of the induced voltage generated by the rotation of the second rotor.

8. The motor unit according to any one of Claims 1 to 7, wherein
the first rotary wing includes a first blade, and
a length of the first blade is shorter than a length of a second blade that is the blade of the second rotary wing.

9. The motor unit according to Claim 8, wherein the length of the first blade is from 1/4 to 2/3, inclusive, of the length of the second blade.

10. An aircraft comprising:
the motor unit according to any one of Claims 1 to 9; and
a body to which the motor unit is attached.

11. The aircraft according to Claim 10, wherein the body includes a drive unit that changes a direction of the motor unit between a direction in which a direction of a propulsive force generated by the first rotary wing is upward and a direction in which the direction of the propulsive force generated by the first rotary wing is forward.
